# EUROPEAN PATENT SPECIFICATION

(11) **EP 0 394 207 B1**
(45) Date of publication and mention of the grant of the patent: **06.09.1995**
(21) Application number: 90850137.2
(22) Date of filing: 10.04.1990
(51) Int. Cl.: H01Q 17/00, C08K 7/02

(54) **Radar camouflage material**
Radarabsorbierendes Material
Matière de camouflage radar

(30) Priority: 19.04.1989 SE 8901418
(43) Date of publication of application: 24.10.1990
(73) Proprietor: DIVINYCELL INTERNATIONAL AB, 312 22 Laholm (SE)
(72) Inventor: Löfgren, Per-Ake, S-302 70 Halmstad (SE)
(74) Representative: Grennberg, Erik Bertil

(56) References cited:
- EP-A- 0 028 967
- EP-A- 0 259 611
- DE-A- 1 916 326
- US-A- 4 579 872
- PATENT ABSTRACTS OF JAPAN vol. 11, no 69 ( C-407)(2516), 3 March 1987 ;& JP-A-61228032

## Description

The present invention relates to a method according to the preamble of the following Claim 1, for the manufacture of radar camouflage material , and to a radar camouflage material of a corresponding kind according to the preamble of claim 10.

Radar camouflage in the form of camouflage nets is well-known, e.g. from DE-A-1 916 326. In this technique, normally also optically camouflaging material of plastic films, e.g. PVC, is provided with conducting material like metal powder and short metal wire pieces.

The object of the present invention is to obtain a mechanically strong material, which is also provided with properties of radar camouflage effect.

Although PVC is not the most common of the foamed plastics materials available on the market, the manufacture of such material is nevertheless well known (see, for instance, Plastic Foams by Calvin J. Benning, Wiley 1964), which is distinguished by having good, well-defined mechanical strength properties and which is used, inter alia, as an intermediate layer in sandwich constructions. The lightness of the material in combination with its mechanical strength properties renders the material particularly useful. Its heat insulating properties are also an added benefit in many instances. Examples of such use are found in the manufacture of cisterns and in the installation of ship's plating.

The most common method applied at present for producing cellular PVC plastic is probably one in which a mixture which includes PVC together with an organic acid anhydride, isocynate and an expander is first treated in a flat container under pressure while raising the temperature, so as to form an embryo sheet, and then treated in water at a temperature in the proximity of 100°C. The expander then generates vapour bubbles and the material subsequently obtains the desired weight by volume, or density.

According to another method, practiced by the Swiss company Lonza, the expander is nitrogen gas supplied to the process in the form of a plastisol under pressure, where the various acrylates are able to cross-link. In this case, expansion takes place quite rapidly when the pressure is lowered during the process.

The object of the present invention is to provide a high-grade, closed-cell PVC cellular plastic which also exhibits an interaction effect with respect to radio radiation in radio wavelengths, suitable for camouflaging purposes.

This object is achieved in accordance with the invention by adding electrically conductive fibres to the aforesaid mixture in an amount of less than 2 percent by weight, said mixture then being allowed to expand and cross-link. The fibres will preferably have a length in the order of 8-15 mm. The fibres will preferably also have surfaces which afford adapted adhesion in relation to the expanding PVC-plastic, so that the fibres will have no appreciable effect on the expansion process. Furthermore, it is beneficial to ensure that the fibre distribution is isotropic, both with respect to quantity and direction. The tensile strength of the fibres will also be such as to obviate the risk of tensile fracture through adhesion to the expanding plastic.

It is well known to admix fibres with plastic material with the intention of improving mechanical strength (shear and tensile strength). This known admixture is counterproductive in this context, in that it is intended to create between fibres and matrix force-conducive or shape-conducive bonds, and the admixture of fibres in a foamed material would therefore counteract expansion. Experiments carried out in conjunction with the invention have confirmed this. It has been found, inter alia by experimentation, that some fibres used conventionally to reinforce plastic materials are unsuitable for the purpose of the invention. On the other hand, it has been found that in some instances fibres which have been surface treated to adhere to a plastic material other than PVC have shown little tendency to prevent expansion during foaming.

With regard to the mechanism of the camouflaging effect of such material, it is possible theoretically either to consider the absorption of radar waves, including scattering, or the impedance of the material. From a purely practical aspect, it is desirous to prevent radiation from an enemy radar transmitter being reflected in a manner which will enable the target to be detected. Effective reflection can be achieved when the target exhibits a large change in its dielectric constant, and consequently in the case of sandwich constructions an impedance-adapted material is preferred. This can be achieved in accordance with the invention, by adding to the aforesaid mixture a second conductive material in powder form, such as carbon powder, titanium powder and aluminum powder, in addition to electrically conductive fibres.

Polyurethane foam can be readily caused to expand in the presence of fibres, when foaming takes place in a wet environment, as distinct to the case of PVC-foam, which in the present case is expanded as a durable gel and not as a plastisol.

In the method of manufacturing PVC cellulose plastic employed by Diab-Barracuda, the mixture is relatively reactive during the gelation process. Consequently, conductive fibres of the aluminized glass-fibre type are not always effective. Such fibres may well be used in other manufacturing methods, as indicated by our experiments, which showed that the fibres functioned well in urethane foam, both with regard to foaming and radar properties.

When practicing the present invention, it is preferred, at present, to use a commercially available carbon fibre sold under the trade name HYFIL (diameter .3 micron, non-round) and another fibre sold under the tradename Thornel T-300 12 K (length 10 mm, diameter 7 microns). This latter fibre, with which the best results have been obtained, is a polyacrylnitrile-based fibre and is said by the manufacturer to be treated for improved adhesion, and therewith improved shear properties, but has been shown to have a relatively small expansion-inhibiting effect on our PVC-foaming process. A third fibre is TRACOR MBA, which is an aluminum-coated glass fibre.

The following compositions have been used in the experiments carried out:
- PVC: 52.33%
- Phthalic acid enhydride: 17.45%
- Azodicarbonamide: 0.75%
- Lead phosphite: 1.00%
- α-phenyl indole: 0.22%
- Azodiisobutyronitrile: 0.75%
- Toluendiisocyanate: 11.50%
- Trichlorofluoromethane: 4.00%
- Diphenylmethyldiisocyanate: 12.00%

The last three components are liquids. Manufacture is effected by thoroughly mixing the dry components, adding the liquid components to the dry mixture and then mixing the components together to form a homogenous plastisol. The fibres are then added and the mixture is introduced into a flat mould, which is then covered with a lid or cover plate and placed in a press, in which the pressure is stepped up to 240 kg/cm² and heated to 40°C. The temperature is increased incremently to 175°C, which takes about 15 minutes, and is held constant for 35 minutes, and is then lowered to room temperature, which takes about a further 40 minutes. The resultant embryo is removed from the mould and then expanded, by immersing the embryo in water at 90°C, which is brought to a temperature immediately beneath boiling point, expansion taking place over a period of time sufficient to achieve the desired result, normally 3-4 hours. The material is subsequently cured in a water bath at 60°C over several calendar days.

A number of tests have been carried out in accordance with examples, an account of which is given below. In those instances when satisfactory products were obtained, tests were carried out on the absorption of radar frequencies.

### Example 1

Fibres were clipped from aluminium foil which had been coated on one side with polyethylene and on the other side with polyester. Large bubbles were obtained in the expanded block, with a fibre in each bubble. The result was found to be totally unsatisfactory.

### Example 2

Fibres comprising very thin aluminium foil, similar to tinsel, were mixed with the plastic material. The fibres dissolved while forming bubbles.

### Example 3

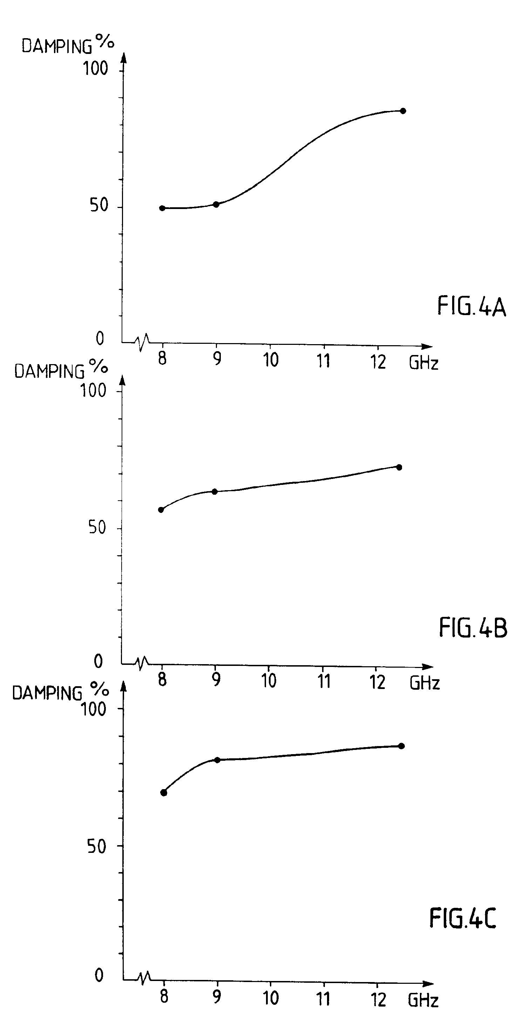

A commericially available fibre (Tracor MBA) consisting of metallized glass fibre (aluminum) was tested in the same manner. The fibre resulted in the formation of bubbles and it was not possible to achieve sufficient expansion, not even when small quantities of fibre were admixed with the plastic material. Neither the mechanical properties of the material nor its ability to absorb radio waves (Figure 4A) were satisfactory. A very good result was obtained, however, when this fibre was first dried at 100°C at atmospheric pressure, or at 80°C in a vacuum.

### Example 4

A fibre of pure aluminium (Transmet) was tested and gave visually satisfactory results, and also provided a material having good mechanical properties at low admixture contents. However, radar absorption of desired values could only be obtained when mixing large quantities of fibres with the plastic material such as to prevent the block from expanding sufficiently.

### Example 5

Aluminium fibres, so-called chaff consisting of metallized glass fibres had previously been tested in urethane foam with satisfactory results. When these fibres were admixed in accordance with the above recipe, satisfactory mechanical properties and non-inhibited expansion were achieved, although absorption in the radar frequency range was similar to the absorption obtained with PVC cellular plastic which contained no fibres. It is probable that the thin metal sheet became corroded or was destroyed mechanically.

### Example 6

In this example, there were used steel fibres, diameter 8 microns, obtained from the company Brunswick, U.S.A. The fibres were gathered into bundles, about 1,000 fibres in each bundle, and held together in polyvinyl alcohol. The bundles were released with water and dried. Expansion problems were experienced even when small quantities were admixed with the plastic material. Radio-wave absorption is low at such small quantities.

### Example 7

Steel fibre, of the steel-wool type, was used in this experiment. The fibre prevented expansion and the block formed was badly deformed. The absorption of radio waves was good.

### Example 8

Carbon fibre Carboflex which is a pitch based carbon fibre having a dimater of about 10 microns and a high spread in length, was used in this experiment. Acceptable expansion was obtained when admixing the fibres in an amount of 0.2% by volume, although radio-wave absorption was low.

### Example 9

Carbon fibres Thornel P-25 W 4 k having an average length of 10 mm were used in this experiment. This fibre is a pitch based carbon fibre, untreated, although of uniform length, and has a diameter of 11 microns. The radio-wave absorbency of the material was weak even at relatively high fibre-concentrations. Expansion is inhibited at very high fibre-concentrations, probably because the fibres are torn apart during the expansion process.

### Example 10

Carbon fibre Hyfil, length 12 mm, diamter 7.3 microns was used in this experiment. The fibre is a pitch based fibre. Good expansion was achieved, at least up to a density of 84 kg/m³, implying a low fibre concentration which gave low radio-wave absorption. Better radio-wave absorption was obtained at lower degrees of expansion 142 kg/m³ (Figure 4B).

### Example 11

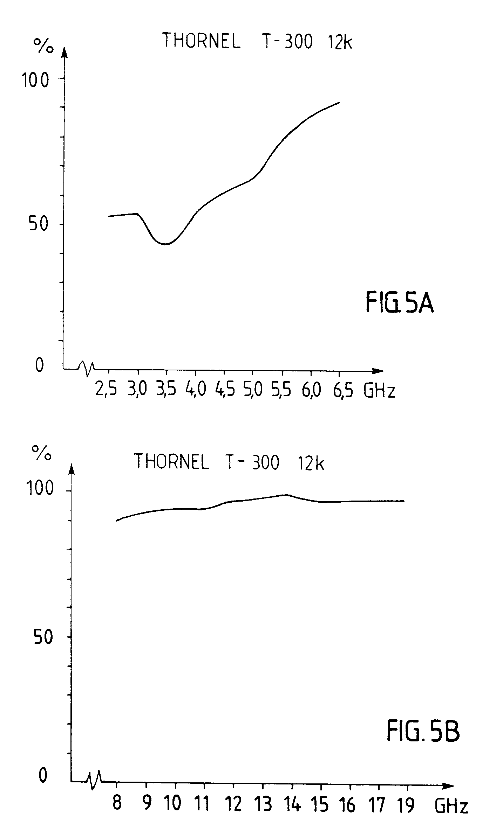

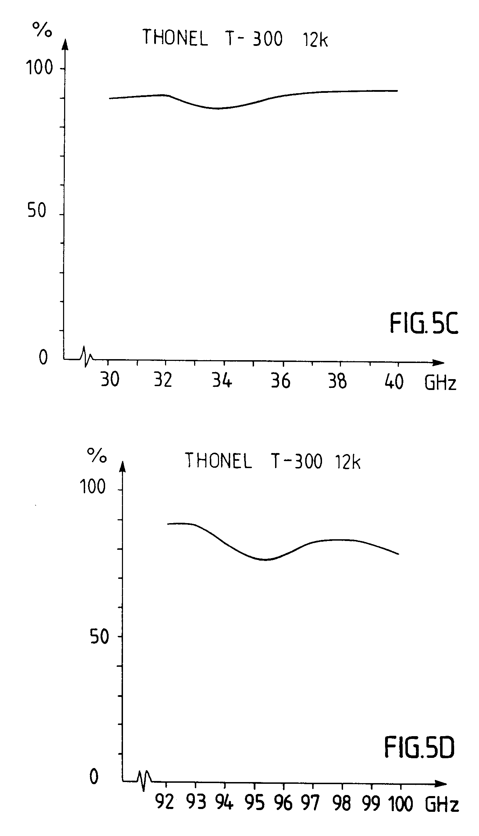

The fibre used in this experiment was carbon fibre Thornel T-300 12 K, average length 10 mm. This fibre is based on polyacrylnitrile. It was difficult to achieve a high degree of expansion (60-80 kg/m²). Satisfactory radar absorption was obtained at about 140 kg/m² and 0.02 percent by weight admixture (Figure 4C and Figures 5A-D respectively).

### Example 12

An impedance-adapted material was manufactured with an addition of 0.5% titanium powder, 0.1% aluminium powder, 0.02% carbon powder and 0.5% Bechinox steel fibres, 6 mm long. Good results were achieved with steel fibres 4 micron in diameter and also with steel fibres 8 micron in diameter. Plates manufactured to a thickness of 60 mm were found to provide a damping of 5 dB both within the X-band (8.12 GHz) and the KA-band (12-18 GHz).

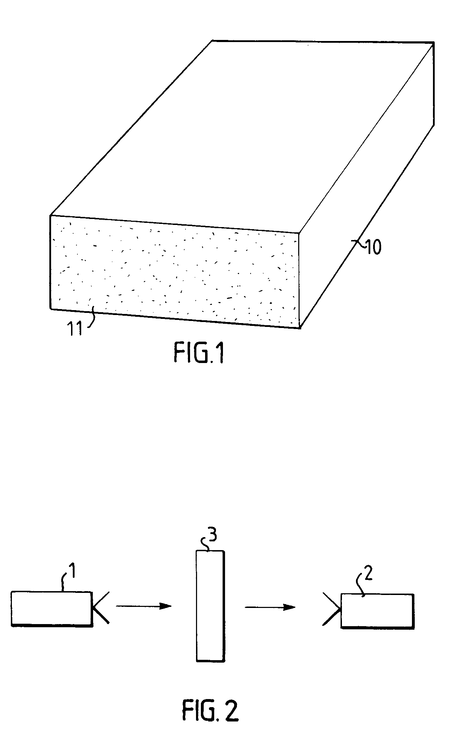

Figure 1 illustrates a representative example of an expanded plate or block 10 having a cut surface 11. The randomly distributed fibres project from the surface 11. Figure 2 illustrates schematically an experiment in radio wave absorption. This experiment was carried out by passing waves of radio frequency from a transmitter 1 through a receiver 2. A PVC cellular-plastic plate incorporating fibres was placed between the transmitter and the receiver. The extent to which the waves were absorbed was determined by measuring absorption with the plate 2 in position and with the plate removed.

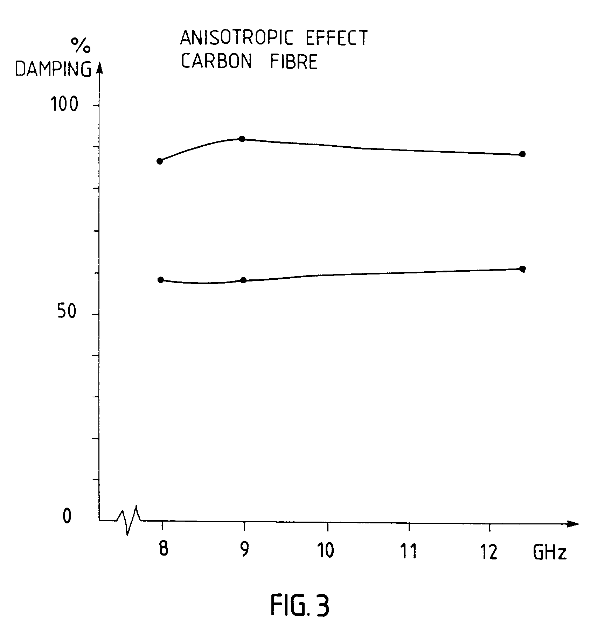

Reference made to absorption in percent in this description refers to the measured amount of energy received with and without the plate. This is clearly not in agreement with a conventional method of expressing absorption, since by absorption is normally meant that the radiation has been lost completely in heat, etc. In this case, however, all losses, including scattering losses, are placed on an equal level with one another. When the fibres randomly disposed in the plate are subjected to the wave field, the fibres will function as small antennas, essentially dipoles (if the coherence phenomenon is ignored), and the radiation will be scattered in all directions. Part of the detected radiation can thus be considered as being scattered, and in fact scattered several times. An example of this is illustrated in Figure 3, which shows two absorption curves obtained with one and the same plate 3 (containing carbon fibres), said plate being rotated through 90° between the separate occasions of recording the curves. As will be seen from Figure 3, absorption within the range of 8-13 GHz is about 60% for one position of rotation, but about 90% for the other position of rotation. This is because the waves transmitted by the transmitter are strongly polarized, and also because orientation of the fibres is not sufficiently random, but exhibits a preferred direction coinciding with the polarization direction of the transmitter 2 in the first case and coinciding with the normal direction of the transmitter in the other case.

This shows the need to randomize orientation of the fibres during manufacture. This applies particularly when pouring the plastisol into the mould since the fibres tend to align themselves with the flow direction, when the plastisol is simply poured into said mould. One method of preventing this is to introduce the plastisol into the mould through a nozzle provided with chicanes, obstacles, which cause the flows to cross. Another method is to fill the mould in a manner to avoid the plastisol running in the transverse direction of the mould. With respect to the use of the material for camouflaging purposes, the radar used by an observer does not have a high resolution, and average randomization of the fibres over large surface areas will suffice in general.

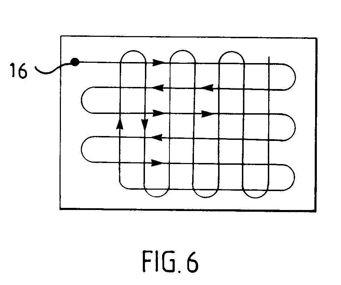

One particularly advantageous method of obtaining good directional distribution is to fill the mould with the plastisol in the form of a relatively narrow stream which is allowed to fall onto the flat mould in a meandering fashion, as illustrated in Figure 6, with the stream of material first falling at point 16 and then meandering, row for row, whereafter a new layer is laid perpendicularly to the first layer in a new row direction, etc. Diagonal layers can also be laid. Although this can be effected manually, it is preferred to use an appropriately programmed industrial robot.

Hitherto, the inventive product has been discussed with respect to absorption in relation to electromagnetic radiation of radar wavelengths. This is conducive with the natural method of taking measurements, namely insertion of the material in the path of a beam between a transmitter and a receiver. This absorption can be expressed in linear measurements in percent, but is often expressed in the logarithmic measurement for damping, dB (decibel).

It should be observed that absorption, as referred to in the present description and claims, does not conform with the strictly physical term absorption, which implies conversion of the electromagnetic radiation to heat, as a rule. Instead, the word absorption, as used in the present specification, refers to the relationship between the intensity detected with the presence of an absorber and the intensity detected in the absence of an absorber. Consequently, radiation which is scattered and therewith lost is also calculated among the losses obtained. This definition is, in fact, extremely appropriate in the present context, since the product concerned is intended for camouflaging purposes. The purpose of the product is to conceal an object which has a recognizable structure or which is highly reflective. The most difficult objects to conceal are, for instance, objects which present a concave corner defined by three, mutually perpendicular metal surfaces, which result in pronounced back-reflection within a wide angular range. When this object is screened with the aid of material according to the invention, a detecting radar beam must first pass through the material, be reflected by the object and again pass through the material on its return, before it arrives back at the transmitter and can be detected. In this context, the losses occurring as a result of scattering will have essentially the same utility as losses occurring by conversion to heat.

The damping curves illustrated in the Figures are obtained with plates having a size or 300 x 300 x 30 mm. A close study of the damping curves will show the following. Figures 4A-4C are representative of the range 8-12 GHz, corresponding to wavelengths of 3.75-2.5 cm. It will be seen that damping is better for short wavelengths (high frequencies) than for long wavelengths (lower frequencies). Although several mechanisms conceivably contribute to this phenomenon, it is assumed that the effect achieved in Figure 4A is because the length of the fibres in the finished material is, on average, smaller than the length of the fibre, about 10 mm, when it was admixed with the plastic material. The curves shown in Figures 5A-5D are representative of measurements made with one and the same material (fibre Thornel T-200 12k) over several frequency ranges. The curves show a strong reduction in absorption between 2.5-6.5 GHz (12-4.6 cm). This can be due to the fact that, inter alia, the wavelength is greater than four times the lengths of the fibres.

In the aforegoing, an embodiment of the invention at present preferred has been described, according to which a PVC plastisol containing an expander is admixed with fibres and the mixture treated under pressure and high temperature to form a blank or embryo, which is then permitted to expand in water at a temperature closer to boiling point. The invention can also be applied in other methods for the manufacture of PVC cellular plastic having closed cells, for instance the method mentioned briefly in the aforegoing in which nitrogen gas (or some other not-readily condensed gas) is supplied under pressure in a treatment process at high pressure and high temperature, therewith to provide a matrix which is expanded by lowering the pressure. In this case, the fibres are added prior to applying pressure.

When practicing the invention, it is important that electrically conductive fibres are distributed randomly to the greatest extent possible, such as to obtain a good and suitable radar masking effect in constructions based on PVC cellular plastic. The measurable mechanical properties of the cellular plastic are changed only very slightly in relation to an expanded PVC cellular plastic which does not contain fibres and which is manufactured in a similar manner. It has thus been possible to establish that the difference is scarcely
measurable, by testing the material with regard to its shear strength, tensile strength and compression strength.

## Claims

1. A method of manufacturing radar camouflage material **characterized** in that the material is based on PVC cellular plastic having closed cells, the method comprising preparing a mixture of PVC and an expander, introducing the mixture into a flat container, heating the container under pressure to gelation and cell nucleation, and causing the mixture to expand under atmospheric pressure through the action of the expander, to form a closed-cell cellular plastic, whereby electrically conductive fibres (11) are added during the preparation of the mixture in an amount beneath 2 percent by weight of the mixture, said fibres being distributed essentially isotropically with respect to direction and distribution, so that said material when irradiated with radio radiation at frequencies of 3-100 GHz exhibits an absorption, calculated on direct transmission (Fig 2), of up to at least 1 dB preferably at least 3 dB per centimeter of thickness, and that said material exhibits essentially the same shear moduls, shear strength and a diagonal tension strength as a similar plastic without fibres.

2. A method according to claim 1, **characterized** in that the mixture includes an organic acid anhydride and isocynate, in that the expander is a fluorohydrocarbon, and in that expansion is effected by treating the material plate removed from the flat container with water or water vapour steam at a temperature at least in the proximity of 100°C.

3. A method according to claim 1, **characterized** in that the flat container is filled by successively introducing the mixture in the form of a narrow stream the impact point of which in the container is caused to wander (Fig 6) systematically over the plane of said container.

4. A method according to claim 1, **characterized** in that the expander comprises a gas, preferably nitrogen, which is supplied to the pressurized flat container, expansion occurring when the pressure is lowered.

5. A method according to claim 1, **characterized** in that the fibres have a length in the order of 8-15 mm.

6. A method according to claim 1, 2 or 3, **characterized** in that the fibres present surfaces of moderate adhesion in relation to the expanding cellular plastic, so that expansion of the plastic will not be substantially inhibited by the fibres.

7. A method according to any one of the preceding claims, **characterized** in that the PVC cellular plastic is expanded to a density of 50-400 kg/m³.

8. A method according to any of the preceding claims, **characterized** in that the fibres used are carbon based fibres.

9. A method according to claim 8, **characterized** in that the carbon-based fibres have not been surface treated.

10. A radar camouflage material **characterized** by comprising a PVC cellular plastic with closed cells, said material including electrically conductive fibres (11) in a proportion below 2 percent by weight which are distributed essentially isotropically with respect to direction and distribution, and said material when irradiated with radio radiation at frequencies of 3-100 GHz exhibits an absorption, calculated on direct transmission (Fig 2), of up to at least 1 dB preferably at least 3 dB per centimeter of thickness, and in that the material exhibits essentially the same shear moduls, shear strength and a diagonal tension strength as a similar plastic without fibres.

11. Material according to claim 10, **characterized** in that said material has a density of 50400 kg/m³.

12. A material according to claim 10 or 11, **characterized** in that the fibre ends exposed when cutting a section (11) through said material will not be extendable to any substantial degree without breaking.

13. A material according to any one of claims 10-12, **characterized** in that the fibres are carbon based fibres.

14. A material according to claim 13, **characterized** in that the carbon fibres are not surface treated.

15. A material according to claim 10, **characterized** in that the material includes 0.1-0.5% carbon fibres.

16. A material according to claim 10, **characterized** in that the material includes 0.3-0.5% titanium powder, about 0.1% aluminium powder and/or about 0.02% carbon powder.

## Patentansprüche

1. Verfahren zur Herstellung eines Radar-Tarnmaterials, dadurch **gekennzeichnet**, daß das Material auf PVC-cellulärem Kunststoff mit geschlossenen Zellen basiert, wobei das Verfahren die Herstellung einer Mischung aus PVC und einem Expansionsmittel, das Einfügen der Mischung in einen flachen Behälter, das Erhitzen des Behälters unter Druck zur Gelierung und Zellnukleierung und das Expandieren der Mischung unter atmosphärischem Druck durch die Wirkung des Expansionsmittels zur Bildung eines celluären Kunststoffes mit geschlossenen Zellen umfaßt, wobei elektrisch leitende Fasern (11) während der Herstellung der Mischung in einer Menge in der Nähe von 2 Gew.-% der Mischung zugegeben werden, wobei die Fasern im wesentlichen isotrop im Hinblick auf die Richtung und Verteilung verteilt sind, so daß das Material, wenn es mit Radiostrahlen bei Frequenzen von 3 bis 100 GHz bestrahlt wird, eine Absorption, berechnet auf die direkte Transmission (Fig. 2), von bis zu wenigstens 1 dB, vorzugsweise wenigstens 3 dB pro cm Dicke entfaltet, und daß das Material im wesentlichen die gleichen Schermodule, Scherstärke und eine diagonale Zugfestigkeit entfaltet wie ein vergleichbarer Kunststoff ohne Fasern.

2. Verfahren nach Anspruch 1, dadurch **gekennzeichnet**, daß die Mischung ein organisches Säureanhydrid und Isocyanat enthält, daß das Expansionsmittel ein Fluorkohlenwasserstoff ist und daß die Expansion durch Behandlung der von dem flachen Behälter entfernten Materialplatte mit Wasser oder Wasserdampf bei einer Temperatur zumindest in der Nähe von 100°C bewirkt wird.

3. Verfahren nach Anspruch 1, dadurch **gekennzeichnet**, daß der flache Behälter durch aufeinanderfolgendes Einfügen der Mischung in der Form eines enges Stromes gefüllt wird, wobei dafür gesorgt wird, daß der Aufprallpunkt davon in dem Behälter systematisch über die Ebene des Behälters wandert (Fig. 6).

4. Verfahren nach Anspruch 1, dadurch **gekennzeichnet**, daß das Expansionsmittel ein Gas, vorzugsweise Stickstoff umfaßt, das zu dem unter Druck gesetzten, flachen Behälter geführt wird, wobei die Expansion auftritt, wenn der Druck erniedrigt wird.

5. Verfahren nach Anspruch 1, dadurch **gekennzeichnet**, daß die Fasern eine Länge in der Größenordnung von 8 bis 15 mm haben.

6. Verfahren nach Anspruch 1, 2 oder 3, dadurch **gekennzeichnet**, daß die Fasern Oberflächen mit moderater Adhäsion in Bezug auf den expandierenden cellulären Kunststoff präsentieren, so daß die Expansion des Kunststoffes durch die Fasern nicht wesentlich inhibiert ist.

7. Verfahren nach einem der vorhergehenden Ansprüche, dadurch **gekennzeichnet**, daß der celluläre PVC-Kunststoff auf eine Dichte von 50 bis 400 kg/m³ expandiert wird.

8. Verfahren nach einem der vorhergehenden Ansprüche, dadurch **gekennzeichnet**, daß die verwendeten Fasern Fasern auf Kohlenstoffbasis sind.

9. Verfahren nach Anspruch 8, dadurch **gekennzeichnet**, daß die Fasern auf Kohlenstoffbasis nicht oberflächenbehandelt sind.

10. Radar-Tarnmaterial, dadurch **gekennzeichnet**, daß es einen cellulären PVC-Kunststoff mit geschlossenen Zellen umfaßt, wobei das Material elektrisch leitende Fasern (11) in einem Anteil von weniger als 2 Gew.-% enthält, die im wesentlichen isotrop im Hinblick auf die Richtung und Verteilung verteilt sind, und daß das Material, wenn es mit Radiostrahlen bei Frequenzen von 3 bis 100 GHz bestrahlt wird, eine Absorption, berechnet auf die direkte Transmission (Figur 2), von bis zu wenigstens 1 dB, vorzugsweise wenigstens 3 dB/cm Dicke entfaltet, und daß das Material im wesentlichen die gleichen Schermodule, Scherstärke und eine diagonale Zugstärke wie ein vergleichbarer Kunststoff ohne Fasern entfaltet.

11. Material nach Anspruch 10, dadurch **gekennzeichnet**, daß das Material eine Dichte von 50 bis 400 kg/m³ hat.

12. Material nach Anspruch 10 oder 11, dadurch **gekennzeichnet**, daß die Faserenden, die exponiert sind, wenn ein Bereich (11) durch das Material geschnitten ist, nicht in einem wesentlichen Ausmaß ohne Bruch dehnbar sind.

13. Verfahren nach einem der Ansprüche 10 bis 12, dadurch **gekennzeichnet**, daß die Fasern Fasern auf Kohlenstoffbasis sind.

14. Material nach Anspruch 13, dadurch **gekennzeichnet**, daß die Kohlenstoffasern nicht oberflächenbehandelt sind.

15. Material nach Anspruch 10, dadurch **gekennzeichnet**, daß das Material 0,1 bis 0,5 % Kohlenstoffasern umfaßt.

16. Material nach Anspruch 10, dadurch **gekennzeichnet**, daß das Material 0,3 bis 0,5 % Titanpulver, etwa 0,1 % Aluminiumpulver und/oder etwa 0,02 % Kohlenstoffpulver umfaßt.

## Revendications

1. Un procédé de fabrication d'une matière de camouflage radar caractérisé en ce que la matière est basée sur une matière plastique cellulaire consistant en PVC ayant des pores fermés, le procédé comprenant la préparation d'un mélange de PVC et d'un agent d'expansion, l'introduction du mélange dans un récipient plat, le chauffage du récipient sous pression jusqu'à la gélification et à la nucléation de pores, et l'expansion du mélange sous la pression atmosphérique, par l'action de l'agent d'expansion, pour former une matière plastique cellulaire à pores fermés, et en ce que des fibres électriquement conductrices (11) sont ajoutées pendant la préparation du mélange en une quantité inférieure à 2% en poids du mélange, ces fibres étant réparties de façon pratiquement isotrope en ce qui concerne la direction et la répartition, de façon que lorsque la matière est exposée à un rayonnement hertzien à des fréquences de 3-100 GHz, elle présente une absorption, calculée par rapport à la transmission directe (figure 2), s'élevant jusqu'à au moins 1 dB et de préférence au moins 3 dB par centimètre d'épaisseur, et de façon que cette matière présente fondamentalement le même module de cisaillement, la même résistance au cisaillement et la même résistance à la traction en direction diagonale qu'une matière plastique similaire, sans fibres.

2. Un procédé selon la revendication 1, caractérisé en ce que le mélange comprend un anhydride d'acide organique et un isocyanate, en ce que l'agent d'expansion est un hydrocarbure fluoré, et en ce que l'expansion est effectuée en traitant la plaque de matière extraite du récipient plat, avec de l'eau ou de la vapeur d'eau, à une température qui est au moins au voisinage de 100°C.

3. Un procédé selon la revendication 1, caractérisé en ce que le récipient plat est rempli en introduisant successivement le mélange sous la forme d'un jet étroit dont le point d'impact dans le récipient est déplacé (figure 6) de manière systématique sur le plan de ce récipient.

4. Un procédé selon la revendication 1, caractérisé en ce que l'agent d'expansion comprend un gaz, de préférence de l'azote, qui est fourni au récipient plat sous pression, l'expansion se produisant lorsque la pression est abaissée.

5. Un procédé selon la revendication 1, caractérisé en ce que les fibres ont une longueur de l'ordre de 8-15 mm.

6. Un procédé selon la revendication 1, 2 ou 3, caractérisé en ce que les fibres présentent des surfaces ayant une adhérence modérée en relation avec la matière plastique cellulaire en expansion, de façon que l'expansion de la matière plastique ne soit pas notablement inhibée par les fibres.

7. Un procédé selon l'une quelconque des revendications précédentes, caractérisé en ce que la matière plastique cellulaire consistant en PVC est expansée jusqu'à une masse volumique de 50-400 kg/m³.

8. Procédé selon l'une quelconque des revendications précédentes, caractérisé en ce que les fibres qui sont utilisées sont des fibres à base de carbone.

9. Un procédé selon la revendication 8, caractérisé en ce que les fibres à base de carbone n'ont pas fait l'objet d'un traitement de surface.

10. Une matière de camouflage radar caractérisée en ce qu'elle comprend une matière plastique cellulaire consistant en PVC avec des pores fermés, cette matière contenant des fibres conductrices de l'électricité (11), en une proportion inférieure à 2% en poids, qui sont réparties de façon fondamentalement isotrope, en ce qui concerne la direction et la répartition, et lorsque cette matière est exposé à un rayonnement hertzien à des fréquences de 3-100 GHz, elle présente une absorption, calculée par rapport à la transmission directe (figure 2), qui s'élève jusqu'à au moins 1 dB, et de préférence au moins 3 dB, par centimètre d'épaisseur, et en ce que la matière présente fondamentalement le même module de cisaillement, la même résistance au cisaillement et la même résistance à la traction en direction diagonale qu'une matière plastique similaire sans fibres.

11. Une matière selon la revendication 10, caractérisée en ce que cette matière a une masse volumique de 50-400 kg/m³.

12. Une matière selon la revendication 10 ou 11, caractérisée en ce que les extrémités de fibres qui sont mises à nu lorsqu'on effectue une coupe (11) à travers cette matière ne pourront pas être étirées d'une manière appréciable sans se rompre.

13. Une matière selon l'une quelconque des revendications 10-12, caractérisée en ce que les fibres sont des fibres à base de carbone.

14. Une matière selon la revendication 13, caractérisée en ce que les fibres de carbone n'ont pas fait l'objet d'un traitement de surface.

15. Une matière selon la revendication 10, caractérisée en ce que la matière contient 0,1 à 0,5% de fibres de carbone.

16. Une matière selon la revendication 10, caractérisée en ce que la matière contient 0,3-0,5% de poudre de titane, environ 0,1% de poudre d'aluminium et/ou environ 0,02% de poudre de carbone.
